# NEW EUROPEAN PATENT SPECIFICATION

(11) **EP 1 400 348 B2**
(45) Date of publication and mention of the opposition decision: **27.04.2011**
(45) Mention of the grant of the patent: 13.06.2007
(21) Application number: 03255310.9
(22) Date of filing: 27.08.2003
(51) Int. Cl.: B32B 27/12, E04D 12/00

(54) **Improvements in and relating to liquid impermeable and liquid vapour/gas permeable fabrics**
Flüssigkeitsundurchlässige und Dampf/Gasdurchlässige Textilware
Textile imperméable aux liquides et perméable aux vapeurs/gaz

(30) Priority: 21.09.2002 GB 0222005; 19.06.2003 GB 0314282
(43) Date of publication of application: 24.03.2004
(73) Proprietor: DON & LOW LIMITED, Forfar, Angus DD8 1FR (GB)
(72) Inventor: Avril, David, Forfar Angus DD8 1FR (GB); Simpson, George, Forfar Angus DD8 1FR (GB); Filmer, Kelly, Forfar Angus DD8 1FR (GB)
(74) Representative: Moreland, David

(56) References cited:
- EP-A- 0 347 795
- EP-A1- 1 331 316
- WO-A1-96/32252
- WO-A1-99/60222
- DE-A- 3 917 631
- DE-A- 10 057 149
- GB-A- 2 355 430
- GB-A- 2 355 430
- US-A- 4 230 057
- US-A- 4 898 761

## Description

### FIELD OF INVENTION

The present invention relates generally to breathable or permeable fabrics, such as liquid impermeable and liquid vapour/gas permeable fabrics. The invention more particularly, though not exclusively, relates to air and/or water vapour permeable fabrics. Such fabrics or materials may find particularly beneficial application as construction fabrics, such as in the building industry, e.g. as housewrap or as roofing underlay or in flooring.

### BACKGROUND TO INVENTION

Liquid impermeable and liquid vapour permeable materials, including laminates, arc known.

Various films or membranes of coextruded or monolayer construction are available which, by virtue of a plurality of micropores or by molecular diffusion mechanisms, have the characteristics of providing a barrier to, for example, aqueous liquids, while at the same time allowing the passage of moisture vapour. A microporous membrane having such properties was previously made by Exxon Corporation under the trade name "EXXAIRE", which is a polyolefinic membrane with excellent vapour transport characteristics. Such is now available from their successor, Tredegar Film Products (formerly Exxon Films) as BF-116W. However, such membranes typically possess inadequate tensile strength properties and low resistance to tear for unsupported use, and in many applications require to be combined with other materials to improve these properties.

EP 0 570 215 A, by the present Applicant, discloses use of a laminate as a roofing underlay material wherein said laminate comprises: a liquid impermeable and liquid vapour permeable microporous membrane and a substrate, the membrane and substrate being intermittently bonded to preserve the liquid vapour transmission properties of the membrane. The laminate is provided with a supporting substrate on both sides of the membrane, the membrane and the substrates being intermittently bonded to preserve the liquid vapour transmission properties of the membrane. In one form one or both of the substrates of said laminate is a spunbonded polymeric non-woven material. The spunbonded non-woven substrate of said laminate is formed as a web to be subsequently calender bonded simultaneously with thermal lamination to the membrane.

EP 0 570 215 A discloses that the spunbonded polymeric non-woven material may be ultra-violet (UV) stabilised. Further, the previously available "EXXAIRE" membrane was temperature stabilised. Thus EP 0 571 215 A discloses a breathable building membrane including an under layer formed of a microporous polymeric film and a top layer formed of a filamentous polymeric fabric which is bonded to the under layer, said under and top layers being disposed in overlying relationship and being stabilised respectively against heat degradation and ultraviolet light degradation.

The content of EP 0 570 215 A is incorporated herein by reference.

EP 0 742 305 A, also by the present Applicant, discloses use as a building material (and particularly as a roofing underlay) of a laminated fabric comprising at least two layers of non-woven sheet material, said fabric comprising:
(1) a first layer of compressed melt-blown material having an average pore size diameter in the range from 1 µm to about 8 µm; and
(2) a second layer of a material having an open porous structure,
and wherein the second layer of material is of a spunbonded structure. The layers comprising the fabric are bonded by a point-bonding technique, such as a calendering treatment. The total area of said points is between 7% and 40% of the fabric area, and the compressed melt-blown material may be rendered into a compressed condition during lamination of the layers.

The content of EP 0 742 305 A is incorporated herein by reference.

GB 2 355 430 A (HUNT TECHNOLOGY LIMITED) discloses a breathable building membrane including an under layer formed of a microporous polymeric film and a top layer formed of a filamentous polymeric fabric (spunbond) which is bonded to the under layer, said under and top layers being disposed in overlying relationship and being stabilised respectively against heat degradation and ultraviolet light degradation, and said top layer having a top surface bearing a moisture vapour permeable reflective coating. It is suggested that the reflective coating comprises a thin metallic layer, such as aluminium, the thin metallic layer being applied by plasma deposition onto the top surface of the top fabric layer to a thickness of about 40 nm. It is reported that the fabric of the top layer is made from spunbonded filaments, and the deposited metallic coating coats the surfaces of the individual filaments which collectively form the top surface layer of the spunbonded fabric top layer, such that the deposited metallic coating does not form a discrete layer on the top surface of the top layer.

The content of GB 2 355 430 A is incorporated herein by reference.

GB 2 355 430 A notes a number of problems in the art, e.g. condensation within a roof or cavity wall space and infra-red (IR) loading on building membranes which may lead to material degradation. GB 2 355 430 A seeks to address such problems, but in a way which gives rise to other problems, including cost and complexity of material manufacture as well as material robustness.

It is an object of at least one embodiment of at least one aspect of the present invention to obviate or at least mitigate one or more of the aforementioned problems.

It is a further object of at least one embodiment of at least one aspect of the present invention to provide an improved building material such as a synthetic breathable building membrane suitable for use as a wall breather membrane or housewrap and/or for use as a roofing underlay.

It is noted by the present Applicant that roofing underlayment fabrics can rise up beneath roof tiles, causing rooftile lift in certain wind conditions. This phenomenon is measurable and is termed "wind lift". Stiff fabrics tend to address this problem by being less susceptible to lift by the wind. Stiff fabrics, however, may produce unwanted noise caused by flexing in windy conditions. A balance between fabric stiffness and noise levels is therefore sought for building fabrics.

It is a further object of at least one embodiment of at least one aspect of the present invention to provide an improved building material which obviates or at least mitigates the abovementioned problem.

It is a yet further object of at least one embodiment of at least one aspect of the present invention to provide a building material having in combination a metallised gas permeable infra-red reflective means, ultraviolet light stabilisation means, and heat stabilisation means, which is moisture impermeable and gas and/or moisture vapour permeable to assist in guarding against roof space or cavity wall condensation, and which increases resistance of the building material to degradation, thereby increasing the life and durability of such material.

The inventors of the present invention have identified a need for an improved construction fabric, which has the following properties:
(i) the ability to resist the ingress of wind driven rain and snow;
(ii) good moisture vapour transmission properties; and
(iii) a surface or means capable of reflecting infra-red radiation/heat.

Fabrics meeting the requirements of (i) and (ii) are taught by EP 0 570 215 A and by EP 0 742 305 A. The present invention enhances the teaching of these disclosures by providing an infra-red reflecting surface to the products described in each of these documents. A method of achieving a reflecting surface by plasma coating of aluminium is described in GB 2 355 430 A. However, a disadvantage of the teaching of that disclosure is that some of the aluminium coating may rub off on the calender bowl during lamination, with a subsequent loss in reflectance. It is the present inventor's belief that in one or more embodiments of one or more aspects of the present invention disclosed herein, this problem will be addressed by complete encapsulation of the metallic component. There is also an additional advantage of the present invention in that the metallic component will not flake off in handling during use, e.g. during the construction process or during transportation.

It is a still further object of one or more embodiments of one or more aspects of the present invention to provide a breathable building fabric having means for providing ultraviolet and heat stabilisation and moisture vapour permeable reflective means which acts to reduce the infra-red loading of the entire building fabric, in use, thereby further increasing the resistance of the building membrane to degradation. Moreover, when the building fabric serves as a roofing underlay, during the construction or repair of a roof when the underlay can be totally exposed for periods, e.g. of three months or more, the fabric may afford the only protection to the building, and the moisture vapour permeable reflective means enhances this protection.

### SUMMARY OF INVENTION

According to a first aspect of the present invention there is provided a laminated breathable fabric having as a layer thereof a reflective film or membrane the fabric further comprising at least one spunbond filamentous polymeric layer wherein the reflective film or membrane and the at least one spunbond filamentous polymeric fabric layer are laminated together, wherein the reflective film or membrane comprises a polymeric material and a reflective material, and wherein further
the laminated breathable fabric comprises a liquid impermeable, liquid vapour permeable and air/gas permeable fabric,
the reflective film or membrane comprises a moisture vapour permeable and air/gas permeable film,
the reflective film or membrane comprises a microperforated metallised film,
the microperforations have a size of around 0.1mm to 1.0mm, and
the reflective film or membrane comprises a film or membrane comprising at least three layers wherein a middle layer includes or comprises the reflective material.

Microperforated film is believed by the Applicant to be advantageous over microporous film as microperforated films typically have a greater reflectance and, therefore, better infra-red (IR) performance.

The microperforations may have a size of preferably around 0.6 mm, and preferably also a surface coverage of around 2% to 10%.

Typically, there may be provided around 30 microperforated holes per inch (per 6.45cam²).

Preferably the reflective material is capable of reflecting at least infra-red radiation and/or heat. Infra-red radiation is normally taken to be in the wavelength region 0.75µm to 1,000 µm, and most particularly herein 5 µm to 50 µm.

Preferably the reflective film or membrane has an emissivity of about 0.1 to about 0.6 and preferably about 0.1 to 0.3. Emissivity is a measure of reflectance, with a totally absorbing surface having an emissivity of 1 (one), and a totally reflecting surface having an emissivity of 0 (zero).

The reflective material may substantially comprise a metal or metallic based material, e.g. aluminium or an alloy thereof.

The membrane may be of an "ABA" type, wherein "A" is a first polymeric material advantageously including a UV stabiliser, and "B" is a second polymeric material including the reflective material.

The reflective material may be provided as an additive to a polymeric material melt used to produce the reflective film or membrane, e.g. as a finely ground metal, or metallic based material, e.g. aluminium or a material including aluminium.

In a multiple layer membrane, the melt additive may be used to provide a layer "B" of second polymer material including the reflective material of an "ABA" type membrane.

As another alternative the membrane may be of an "ACA" type in which "A" is a fist polymeric material, advantageously including a UV stabilizer, and "C" is a reflective material deposited onto one of the first polymer material layers "A".

The first polymeric layer "A" may be around 10 µm to 30 µm in thickness, and preferably around 15µm thick.

The reflective material "C" may be around 10 nm to 100 nm thick, and preferably around 40 nm thick.

The reflective material may be deposited by a deposition process, e.g. vacuum vapour deposition or plasma deposition.

The polymeric material(s) may comprise one or more additives such as ultra-violet (UV) stabilisers, hydrophobic additives, flame retardants, pigments (e.g. colour pigments), and/or plasticisers.

The polymeric material(s) may be thermoplastic polymer(s), e.g. selected from polypropylene, polyamide or polyester.

The reflective film or membrane may comprise a breathable polymeric film or membrane layer.

Advantageously, in one embodiment the reflective film or membrane and the at least one filamentous polymeric fabric layer are intermittently bonded to preserve the moisture vapour transmission properties thereof.

In one advantageous implementation, the reflective film or membrane is hot melt bonded to the at least one spunbond filamentous polymeric fabric layer.

In a modification, a further spunbond layer is provided between the reflective film or membrane, and a breathable polymeric membrane. The further spunbond layer may provide additional strength.

Preferably the further spunbond layer contains an ultra-violet stabiliser and/or a hydrophobic additive.

Preferably the film, further spunbond layer, membrane and spunbond layer are intermittently bonded to preserve the moisture vapour transmission properties thereof.

The laminated breathable fabric may include a woven fabric layer.

The woven fabric of said laminated breathable fabric may be in the form of a scrim intermittently bonded to one of the other laminate components.

The woven fabric of said laminated breathable fabric may be bonded to the at least one breathable polymeric film or membrane layer, or to the at least one filamentous polymeric fabric layer, or to the reflective film or membrane.

According to a second aspect of the present invention there is provided a breathable building or construction material comprising a laminated breathable fabric according to the first aspect of the present invention.

The breathable building material may advantageously be adapted for use as a roofing underlay. Alternatively, the breathable building material may be advantageously adapted for use as a housewrap, e.g. for use in timber frame constructions, or as a wall breather membrane, or alternatively in other construction uses such as a temporary cover, e.g. a building cover or scaffolding cover, tent, tarpaulin or the like. The breathable building material may also find use as a flooring material.

According to a third aspect of the present invention there is provided use as a building or construction material of a laminated breathable fabric according to the first aspect of the present invention.

According to a fourth aspect of the present invention there is provided a building construction including a laminated breathable fabric according to the first aspect of the present invention.

The building construction may comprise a roof such as a tiled roof structure. Alternatively, the building construction may comprise a timber frame or a cavity wall. Alternatively the building construction comprises a floor.

According to a fifth aspect of the present invention there is provided a building including a building construction according to the fifth aspect of the present invention.

### BRIEF DESCRIPTION OF DRAWINGS

Embodiments of the present invention will now be described by way of example only, and with reference to the accompanying drawings, which are:
- **Figures 1(a), (b), (c)**: schematic sectional side views of breathable fabrics falling outside the scope of the present invention;
- **Figure 2**: a schematic diagram of an apparatus for manufacture of filamentous polymeric fabrics;
- **Figure 3**: a schematic diagram of a lamination apparatus for manufacture of breathable fabrics;
- **Figure 4**: a schematic diagram of an apparatus for manufacture of filamentous polymeric fabrics and lamination thereof in the manufacture of breathable fabrics;
- **Figure 5**: a schematic diagram of an apparatus for manufacture of a polymeric membrane in the form of a microperforated film for use in the breathable fabrics of Figures 1(a), (b) or (c) ;
- **Figures 6 (a), (b)**: schematic diagrams of a production apparatus and a microperforation apparatus, respectively, for manufacture of a polymeric membrane in the form of a melt-blown film for use in Lhe breathable fabrics of Figures 1 (a), (b) or (c).
- **Figures 7(a), (b), (c)**: schematic sectional side views of first, second and third embodiments of breathable fabrics according to the present invention;
- **Figure 7(d)**: a schematic representation of a pattern of microperforations in a breathable fabric according to the present invention;
- **Figures 8(a), (b)**: schematic sectional side views of breathable fabrics falling outside the scope of the present invention;
- **Figure 9**: a schematic diagram of an apparatus for manufacture of strands (tapes) for manufacture of the breathable fabrics of Figures 8 (a) or (b);
- **Figure 10**: a schematic diagram of an alternative apparatus for manufacture of strands (tapes) for manufacture of the breathable fabrics of Figures 8(a) or (b);
- **Figure 11**: a schematic cross-sectional side view of a part of a roof including the breathable fabric of Figures 1(a), (b) or (c), Figures 7 (a), (b), (c) or Figures 8 (a) or (b) ; and
- **Figure 12**: a cut-away perspective view of a wall including the breathable fabric of Figures 1(a), (b) or (c), Figures 7 (a), (b), (c) or Figures 8(a) or (b).

### DETAILED DESCRIPTION OF DRAWINGS

### FABRICS FALLING OUTSIDE THE SCOPE OF THE INVENTION

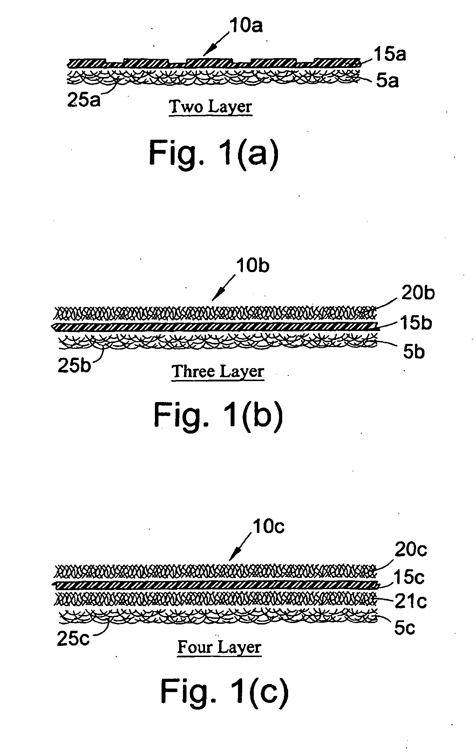

Referring to Figure 1 (a), there is illustrated a filamentous polymeric fabric 5a falling outside the scope of the present invention. Filaments of the filamentous polymeric fabric 5a. comprise a polymeric material and a reflective metallic material.

The filamentous polymeric material 5a is formed from a "spunbond" process as will hereinafter be described in greater detail, and is therefore termed a "spunbond" fabric.

The filamentous polymeric fabric 5a is breathable, that is to say moisture vapour permeable and air permeable, and the reflective material is capable of reflecting at least infra-red (IR) radiation and/or heat. The reflective material typically substantially comprises a metal or metallic based material, and in this embodiment comprises aluminium or an alloy thereof.

The polymeric material can comprise additives such as an ultra-violet (UV) stabiliser, hydrophobic additives, flame retardants, pigments (e.g. colour pigments), and/or plasticisers. The polymeric material is a thermoplastic polymer, e.g. selected from polypropylene, polyamide or polyester, and in this embodiment is polypropylene.

A breathable fabric 10a comprises in part a first layer comprising filamentous polymeric fabric 5a. The breathable fabric 10a comprises the filamentous polymeric fabric 5a and a second layer 15a comprising a breathable, e.g- microperforated or microporous polymeric membrane 15a. The breathable polymeric membrane 15a is vapour permeable and liquid impermeable.

The first and second layers 5a, 15a are intermittently bonded together, the first layer 5a comprising a top (e.g. outer) layer, and the second layer 15a comprising an under (e.g. inner) layer. The first and second layers 5a, 15a are advantageously stabilised respectively against UV light degradation and heat degradation. In this example the breathable polymeric membrane 15a comprises a UV stabilised breathable membrane, which may or may not have a hydrophobic treatment applied as a melt additive or topically. The breathable polymeric membrane 15a is selected from one of a melt-blown film or a microporous or microperforated film. Further, the membrane 15a is made from a thermoplastic polymer selected from: polypropylene, polyolefins, polyesters or polyamides, and in this embodiment polypropylene.

A melt blown fabric comprises a mass of micro-filaments, typically 1 µm to b µm diameter. This mass of filaments may or may not be calendered, i.e. the mass may be subjected to pressure with or without the application of heat. The calender rollers may be smooth, or a combination of smooth and embossed. The degree of calendering applied will depend on the required balance of properties of water hold out versus moisture vapour transmission.

A microporous film is prepared from a polyolefin/filler mix. The filler may be Calcium Carbonate, Titanium Dioxide or similar. The film is stretched either mono-axially or bi-axially in such a way that micropores of approximately 0.2 µm are formed through the film. Such a process is described in EP 0 309 073 A (EXXON).

The Applicant considers the addition of a UV stabiliser to prevent ultraviolet degradation on exposure to light to be beneficial. In addition, the properties of the membrane 15a may be enhanced by a hydrophobic agent which may be added as a melt additive or applied topically. The Applicant considers the use of a hydrophobic agent to be particularly beneficial in the case of a melt blown fabric, where such will improve the water holdout properties of the final product- In addition, contact with house timbers, which have been treated with water based timber treatments can have an adverse effect on the water hold out properties. This can be minimised by the application of a suitable hydrophobic treatment.

Thus the breathable polymeric membrane 15a comprises a liquid impermeable and liquid vapour permeable membrane; and the filamentous polymeric fabric 5a comprises a substrate, the membrane and substrate being intermittently bonded to preserve the liquid vapour transmission properties thereof.

In a modification the breathable fabric 10a comprises only the filamentous polymeric fabric 5a. Such may be sufficient for some less demanding applications, e.g. housewrap.

Referring to Figure 1 (b), a breathable fabric or laminate 10b falling outside the scope of the present invention is provided with supporting substrates 5b, 20b on both sides of the membrane 15b, the membrane 15b and the substrates 5b, 20b being intermittently bonded to preserve the liquid vapour transmission properties thereof. The further supporting substrate 20b is also a filamentous polymeric fabric, the same or similar to the substrate 5b.

The laminated breathable fabrics 10a, 10b optionally includes a woven fabric layer (not shown)- The woven fabric of such laminates can be in the form of a scrim intermittently bonded to one of the other laminate components. The woven fabric of said laminate 10a;10b can be bonded to the membrane 15a;15b. In one form, one or both of the substrates 5a; 5b, 20b of said laminate 10a; 10b is a spunbonded polymeric non-woven material. The spunbonded non-woven substrate 5a; 5b, 20b of said laminate 10a; 10b is/arc formed as a web(s) to be subsequently calender bonded simultaneously with thermal lamination to the membrane 15a; 15b. The web(s) of said laminate 10a; 10b are typically of a weight of between 10 g/m² and 200 g/m², and particularly between 30 g/m² and 90 g/m² The membrane 15a; 15b of said laminate 10a; 10b can be of monolayer or multilayer construction.

The layers of the laminate 10a; 10b are thermally calender bonded. The bonded area of said laminate 10a;10b forms between 5% and 50% of the surface area of the laminated layers, particularly between 14% and 20%, and advantageously around 19%.

In the laminate 10b the filamentous polymeric fabric 5b comprises a first spunbond fabric, and the breathable fabric 10b comprises: the first spunbond fabric 5b, the breathable polymeric membrane 15b and a second spunbond fabric 20b. The first spunbond fabric 5b and breathable polymeric membrane 15b are intermittently bonded together by a first bonding pattern, and the breathable polymeric membrane 15b and the second spunbond fabric 20b are intermittently bonded by a further bonding pattern. The bonding pattern and the further bonding pattern may be the same, similar or may be dissimilar.

Referring to Figure 1(c), a laminate 10c falling outside the scope of the present invention is further provided with a third spunbond fabric 21c between the first spunbond fabric 5c and the membrane 15c.

The filamentous polymeric fabrics 5a;5b;5c/breathable fabrics 10a; 10b; 10c find use as breathable building or construction materials 25a;25b;25c. The breathable building materials 25a;25b;25c can be adapted for use as a roofing underlay. However, the breathable building materials 25a;25b;25c can also advantageously be adapted for use as a housewrap, or alternatively wall breather membrane, or alternatively as a temporary cover, e.g. a building cover or scaffolding cover, or tent, tarpaulin or the like. The breathable building materials 25a, 25b, 25c can also find use as a flooring material.

The filamentous polymeric fabrics 5a;5b;5c are manufactured by a method comprising the steps of: providing a polymeric material and a reflective metallic material; and forming the polymeric material and the reflective metallic material into the filamentous polymeric fabric 5a;5b;5c. The step of forming is carried out using a spunbond process. The reflective metallic material is a metallic based material or a metal, and the polymeric material and reflective metallic material are provided as a metallised polymer masterbatch. Advantageously the metal (in this case aluminium) is finely ground and added to a polymeric melt used to produce the spunbond material. The reflective component can be an aluminiurcrised/aluminised masterbatch such as SILVET^{®} 210-30-E1 or ARX V 01/015 IR.

SILVET^{®} 210-30-El available from Silbcrline Plastics Limited is an aluminised polymer masterbatch offering: very fine particle size aluminium flake pigment; low dusting, dry granular delivery form; compatibility with a wide range of thermoplastics. SILVET^{®} 210-30-El provides a very fine particle size aluminium flake pigment in a free flowing, non-dusting, meterable, granular form. It provides direct pigmentation of extruded articles and colouration of masterbatch and compound, a high metal content thereof offering considerable formulating flexibility. This grade is compatible with a wide range of thermoplastics, including styrenics, polyolefins, polyamides, polycarbonates, polyesters and acetals. Due to a fine particle size, SILVET^{®} 210-30-E1 has very high opacity. Loadings of 0.3% to 1.2% in the final pigmented article are typical. It is normally sufficient to tumble blend granules thereof with polymers and any other colorants and additives before processing. As with all aluminium flake pigments, the use of high shear forces should be minimised as such can cause loss of brightness and metallic effect.

properties of SILVET^{®} 210-30-E1 are:

| | |
|---|---|
| Aluminium pigment content | = 69.0% minimum by weight |
| Carrier content | = 29.0% minimum by weight |
| Non volatile content | = 98.5% minimum at 100°C |
| Median flake diameter | = approximately 8 µm. |

An alternative is ARX V 01/015 IR available from ARGUS Additive Plastics GmbH which is an Infra-red-reflector-Masterbatch having an absorption region within the TR range.

The step of forming normally includes the further step of: calendering the filamentous polymeric fabric, e.g. with a point emboss pattern.

The breathable fabrics 10a;10b;10c are manufactured by a method comprising the steps of: forming the filamentous polymeric fabric 5a;5b;5c; providing the breathable polymeric membrane 15a;15b;15c; and laminating the filamentous polymeric fabric 5a;5b;5c and the breathable polymeric membrane 15a;15b;15c one to the other.

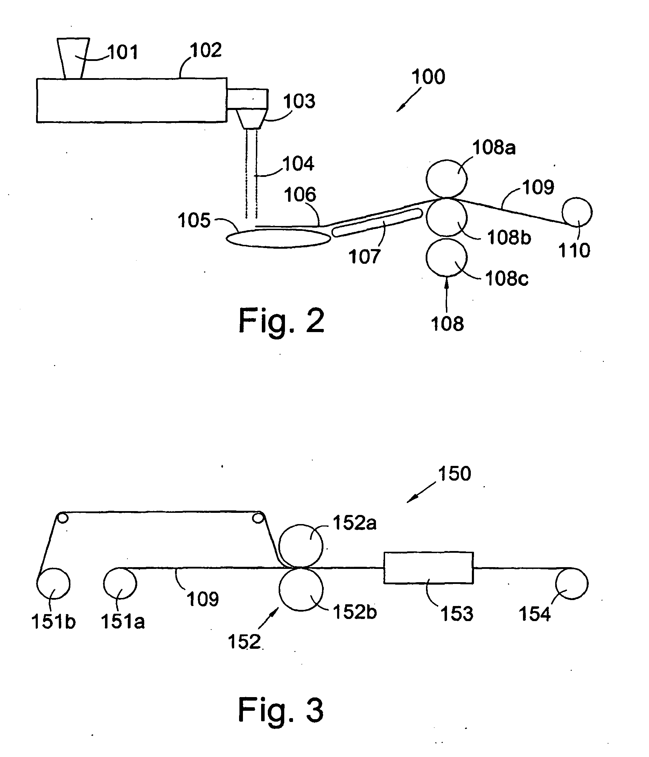

Referring to Figures 2 and 3, in one implementation (so-called "OFF-LINE") the filamentous polymeric fabric 5a;5b;5c is formed and rolled prior to lamination. The filamentous polymeric fabric 5a;5b;5c is formed by spunbond apparatus 100, and laminated by laminator 150, as will hereinafter be described.

In such method, the step of forming includes the steps of: laying down filaments so as to form the filamentous polymeric fabric 5a;5b;5c and calendering the filamentous polymeric fabric 5a;5b;5c, e.g. with a first point emboss pattern. Calendering is a thermal bonding technique involving the application of a combination of heat and pressure.

Further, in such methods the step of laminating includes the step of calendering the filamentous polymeric fabric 5a;5b;5c and membrane 15a;15b;15c together, e.g. with a second point emboss pattern.

The first and second point emboss patterns can be selected to be substantially the same or different.

The spunbond apparatus 100 comprises a polymer feed for forming filaments and a plurality of filament spinners 103. Additives such as the reflective material can be introduced in the polymer feed prior to melting and subsequent mixing in an extruder. Filaments are cooled by cooling means 104 and loose laid as a web 106 on a spinbelt 105. A conveyor 107 conveys the web 106 to a point bonding calender 108. The calender 108 has three embossing bowls, a first embossing bowl 108a with a 19% embossing area (so-called STANDARD BOND) and a diamond embossing pattern, a second bowl 108b which is smooth, and a third bowl 108c with a 7½% embossing area (so-called LO-BOND) with a round embossing pattern. The web 106 is selected to be passed between the first and second bowls 108a, 108b or the second and third bowls 108b, 108c dependent upon the embossing pattern to be selected. After calendering the web 106 forms a spunbond fabric 109, i.e. the filamentous polymer fabric 5a; 5b, 20b; 5c, 20c, 21c. The spunbond fabric 109 is then rolled on wind-up roller 110.

The spunbonding processing thus involves passing a polymer melt through a die with a plurality of holes to form a mass of filaments. The filaments are stretched, cooled, and formed into a loose web on a conveyor belt, and then passed through a calender. The calender comprises a smooth roller and an embossed roller, the embossing pattern of which may typically cover from 7% to 35% of the surface area, and which may be a diamond, round or other shape. The smooth bowl of the calender should be of the swim roll type, i.e. is capable of being 'bent' to accommodate variations in thickness of the web. Both bowls of the calender should be heated, the temperature selected being dependent on the type of polymer being processed, and on the balance of properties required in the end product.

The laminator 150 comprises unwind stands 151a,151b from which a reel of spunbond fabric 109 and membrane 15a;15b;15c, respectively are unrolled and passed through a laminating calender 152. The calender 152 has two embossing bowls, a first embossing bowl 152a with an embossed pattern and a second bowl 152b which is smooth. The embossed pattern may be the same as that of one of the embossed bowls 108a, 108c of the spunbond apparatus 100 or may be different. The laminator 150 also comprises an accumulator 153 and a winder 154.

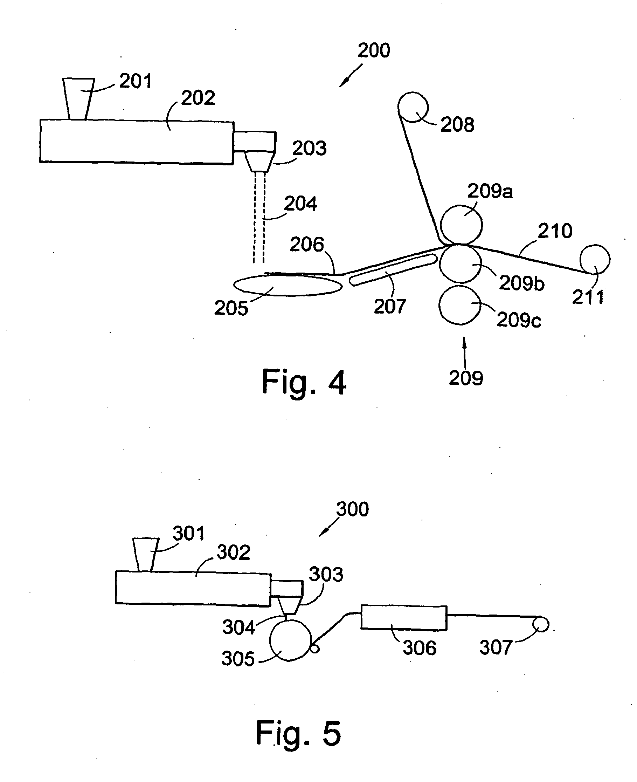

Referring to Figure 4, in a second implementation (so-called "ON-LINE") the filamentous polymeric fabric 5a; 5b; 5c is laid down (loose) on the membrane. The filamentous polymeric fabric 5a;5b;5c is formed and laminated by spunbond/laminator apparatus 200.

In such method the step of laminating includes the step of calendering the filamentous polymeric fabric 5a; 5b;5c and membrane 15a; 15b, 15c, e.g. with a point emboss pattern.

The spunbond/laminator apparatus 200 is similar to the spunbond apparatus 100 of Figure 2. However, in the apparatus 200 there is provided a film unwind stand 208 from which a roll of membrane 15a;15b;15c is unwound and laminated to unbonded web 206.

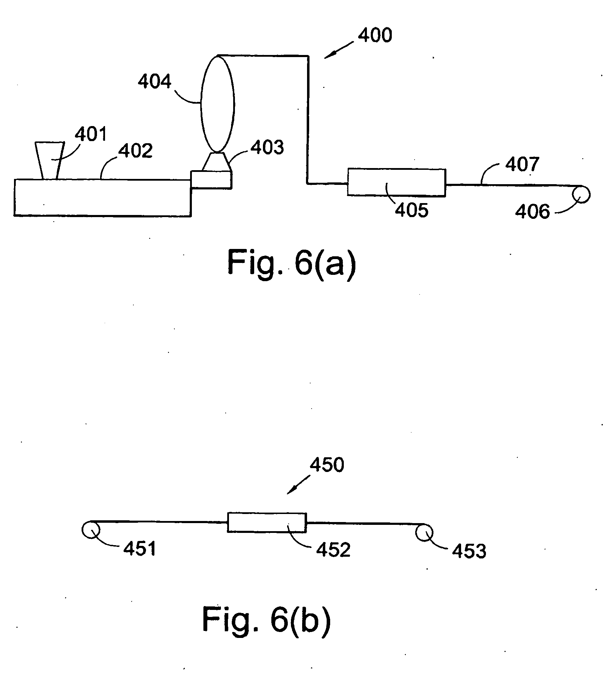

In the case where the membrane 15a; 15b; 15c is a microperforated film, the membrane 15a; 15b; 15c can be manufactured by cast film apparatus 300 shown in Figure 5, and microperforation apparatus 450 shown in Figure 6(b). The cast film apparatus 300 comprises a polymer feed 301, an extruder 302 including a film extrusion means 303 for forming a film 304 (membrane 15a;15b;15c), a chill roll 305, a film orientation means 306 (mono- or bi-axial) and a film winder 307.

Microperforation apparatus 450 comprises an unwind stand 451, microperforation means 452 and wind up stand 453.

Alternatively in the case where the membrane 15a; 15b; 15c is a microperforated film the membrane 15a;15b;15c can be manufactured by blown film apparatus 400 shown in Figure 6(a) and microperforation apparatus 450 shown in Figure 6(b). Blown film apparatus 400 comprises a polymer feed 401, extruder 402 including film extruder means 403 for forming a blown film bubble 404 to provide film 407 (membrane 15a:15b;15c), a film orientation means 405 (mono- or bi-axial) and a film winder 406.

It will be appreciated that the filamentous polymeric fabrics 5a; 5b; 5c forming part of a laminate 10a; 10b; 10c may be used as a single layer product. In such case the filamentous polymeric fabric may have a weight of around 100 g/m² to 150 g/m². In other cases, e.g. the two-layer fabric 5a, the filamentous polymeric fabric may have a weight of around 60 g/m² to 100 g/m² and the membrane 15a may have a weight of around 30 g/m² (and typically a thickness of around 30 microns).

### FABRICS ACCORDING TO THE INVENTION

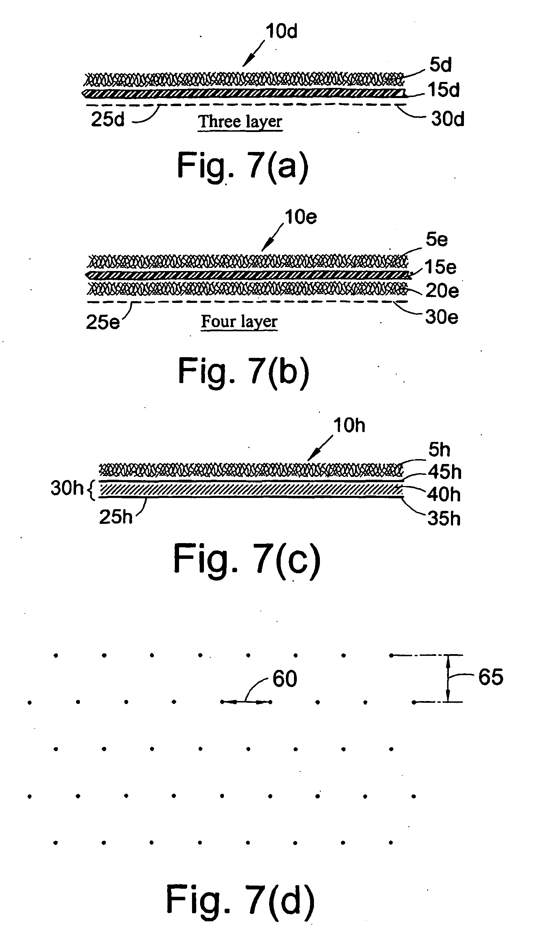

Referring to Figure 7(a) there is illustrated a laminated breathable fabric 10d falling outside the scope of the present invention having a layer thereof a reflective film or membrane 30d.

The reflective film 30d comprises a breathable (moisture vapour permeable and optionally air permeable) film, which is a microperforated film. The reflective film 30d advantageously contains a UV stabiliser. The reflective film 30d comprises a gas barrier polypropylene film having a metal (e.g. aluminium) foil laminated thereto.

The reflective film 30d typically has a thickness of 25 µm to 30 µm, and is manufactured by a cast or blown method as hereinbefore described (see Figures 5, 6(a) and 6(b). The reflective film 30d is microperforated so as to be gas permeable and then laminated to the at least one breathable polymeric membrane 15d. the microperforations are of the order of 0.1 mm to 1.0 mm in diameter.

The fabric 10d comprises the at least one breathable polymeric membrane layer 15d, and also at least one filamentous polymeric fabric layer 5d.

As illustrated in Figure 7(a) the reflective film 30d is laminated to the at least one breathable polymeric membrane 15d. In a modification, however, the reflective film 30d is laminated to the at least one filamentous polymeric fabric layer 5d.

As shown in Figure 7(a) the laminated breathable fabric 10d comprises the reflective film 30d, the breathable polymeric membrane 15d and the spunbond filamentous polymeric fabric layer 5d. The film 30d, membrane 15d and spunbond 5d are intermittently bonded to preserve the moisture vapour transmission properties thereof.

In Figure 7(b) a further spunbond layer 20e is provided between the film 30e and membrane 15e. the further spunbond layer 20e provides additional strength.

An embodiment of the present invention is shown in Figure 7(c) which illustrates a laminated breathable fabric 10h having as a layer thereof a reflective film 30h. the reflective film 30h comprises a three layer structure comprising a first polyolefin polymer layer 35h formed e.g. of polypropylene or a copolymer of polyethylene and polypropylene, upon which is deposited a second layer 40h of metal, such as aluminium, e.g. by vacuum vapour or plasma deposition. Third layer 45h comprises a polymer layer also formed of polypropylene or a copolymer of polyethylene and polypropylene.

The reflective film 30h typically has a thickness of 25 µm to 30 µm, and is typically manufactured by a cast or blown method employing the apparatus of Figure 5 or Figure 6(a).

The reflective film 30h is made by, for example, forming the first polymer layer 35h ("A"), followed by vacuum vapour or plasma deposition of a layer 40h of aluminium metal ("C") upon the polymer layer 35h. The polymer layer 35h with the metal deposit layer 40h ("A") formed thereon is then laminated to a second polymer layer 45h ("A") using a calender with, for example, heated smooth rolls. The polymer layers 35h and 45h typically have a thickness of approximately 15 µm. The metal layer 40h typically has a thickness of the order of 40 nm.

The fabric 10h also comprises at least one spunbond filamentous polymer fabric layer 5h.

The three layer reflective film 30h is formed and microperforated, e.g. employing the apparatus of Figures 5 and 6 (b) or Figures 6(a) and 6(b), prior to lamination to the at least one spunbond filamentous polymer fabric layer 5h. The microperforations are typically of the order of 0.1 mm to 1.0 mm in diameter.

Typically the reflective film 30h has an optical density of 2 to 2.5, as measured by a Tobias Densitometer.

The emissivity of the microperforated reflective film 30h was measured according to ASTM C 1371-98, giving a value of typically 0.23 to 0.28, and in one case 0.14,

Figure 7(d) shows an example pattern of microperforations in the reflective film 30h which are spaced apart, typically at around 4.5 mm and 5 mm, in an offset or "diamond" pattern as shown by arrows 60 and 65 respectively. The microperforated offset pattern assists in maintaining the strength of the reflective film 30h.

As shown in Figure 7(c) the laminated breathable fabric 10h comprises the reflective film 30h and the spunbond filamentous polymeric fabric layer 5h. The film 30h and spunbond 5h are intermittently bonded to preserve the moisture vapour transmission properties thereof in a similar manner to the first and second embodiments, Such bonding may be performed using an embossed calender, e.g. using a combination of heat and pressure.

During lamination of the reflective film 30h to the spunbond layer 5h, the polymer layer 45h of the reflective film 30h is optionally caused to melt and thereby adhere to the spunbond layer 5h. In this way, polymer layer 45h can be considered to be a so-called hot melt adhesive.

Like layers of the fabrics 10d, 10e; 10h comprise the same material as those of the fabrics 5a; 5b of Figures 1 (a) and 1 (b) . Particularly the spunbond layers 5d;5e;15e;5h can contain a UV stabiliser and/or a hydrophobic additive.

Also the film 30d;30e, further spunbond 20d, membrane 15d;15e, and spunbond layers 5d;5e are intermittently bonded to preserve the moisture vapour transmission properties thereof, in a similar manner to the fabrics of Figures 1(a) and 1(b).

The laminated breathable fabric 10d;10e;10h finds use as a breathable building or construction material 25d; 25e; 25h. The breathable building material 25d; 25e; 25h can be adapted for use as a roofing underlay. However, alternatively the breathable building material 25d;25e;25h can advantageously be adapted for use as a housewrap or wall breather membrane, or alternatively as a temporary cover, e.g. a building cover or scaffolding cover, or tent, tarpaulin or the like. The breathable building material 25d, 25e, 25h may also find use as a flooring material.

The laminated breathable fabric 10d;10e;10h is manufactured by a method comprising the steps of: providing the reflective film 30d;30e;30h, forming the filamentous polymeric fabric 5d;5e;5h, and forming the reflective film 30d;30e;30h and filamentous polymeric fabric 5d;5e;5h into the laminated breathable fabric 10c;10d;10h. The step of providing the reflective film 30d;30e;30h may be carried out using the apparatus of Figures 5 and 6(b) or Figures 6(a) and 6(b).

In respect of reflective film 30d;30e, the reflective material is a metallic material or a metal, and the polymeric material and reflective material are provided as a metallised polymer master-batch. The metal, e.g. aluminium, is finely ground and added to a polymeric melt used to produce the reflective membrane, The manufacture of such a membrane comprising a microporous polypropylene film is described in EP 0 283 200 A (EXXON). The aluminised masterbatch is a concentrate of finely ground aluminium particles in a suitable carrier to give good dispersion throughout the melt.

The step of forming is carried out by calendering. Such method may be carried out "OFF-LINE" using the apparatus of Figures 2 and 3 or "ON-LINE" using the apparatus of Figure 4.

The fabric 10d of Figure 7(a) may comprise a reflective film 30d having a weight of around 30 g/m², a membrane 15d having a weight of around 25 g/m² to 35 g/m² and a filamentous polymeric fabric layer 5d having a weight of around 60 g/m² to 100 g/m².

The fabric 10h of Figure 7(c) may comprise a reflective film 30h having a weight of around 30 g/m² and a filamentous polymeric fabric layer 5h having a weight of around 60 g/m² to 100 g/m².

It will be understood that breathable membranes are typically inherently weak, and in order to achieve the high tensile and nail tear properties required by the construction industry, the membrane can be reinforced by combining it with a reinforcing layer or layers. The preferred reinforcing layer(s) as disclosed herein is a nonwoven fabric produced by a spunbonding process referred to herein as a 'spunbond', but other types of reinforcing, such as a carded nonwoven fabric or a woven fabric or scrim, may be provided, either in place of the spunbond or in addition to the spunbond.

### FABRICS FALLING OUTSIDE THE SCOPE OF THE INVENTION

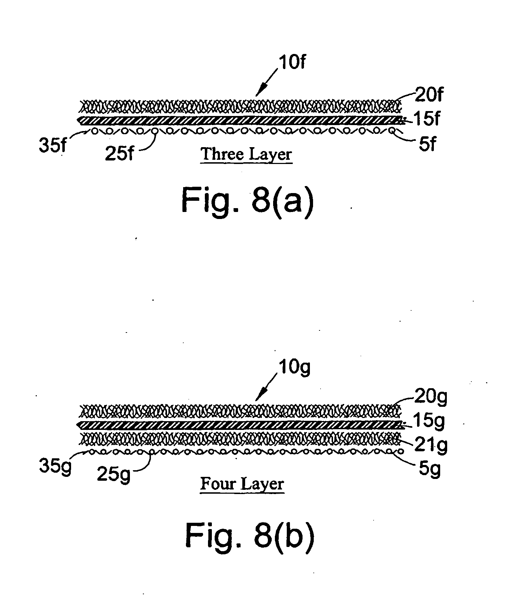

Referring to Figure 8(a) there is illustrated a woven polymeric fabric 5f falling outside the scope of the present invention, strands of which comprise a polymeric material and a reflective material. The strands are in the form of tapes 35f.

The reflective material is capable of reflecting at least infra-red (IR) radiation/heat. The reflective material typically substantially comprises a metal or metallic based material, and in this case comprises aluminium or an alloy thereof.

The polymeric material can comprise additives such as ultra-violet (UV) Stabiliser, hydrophobic additives, flame retardants, pigments (e.g. colour pigments) and/or plasticisers.

The tapes 35f can be of a mono-layer construction. Alternatively, the tapes 35f can be of a multi-layer construction. In a multi-layer construction the reflective material can be added to an inner layer of a co-extruded tape 35f. In one case the multi-layered tape 35f is a three layer construction, wherein a centre layer contains the reflective material and the outer layers contain a UV stabiliser.

A breathable fabric 10f comprises in part woven polymeric fabric 5f. The construction of the woven fabric 5f is selected so as not to impair moisture vapour transmission properties of the fabric 10f.

The breathable fabric 10f also comprises a laminate material including a first layer comprising the woven polymeric fabric 5f and a second layer comprising a breathable polymeric membrane 15f. The first and second layers 5f,15f are intermittently bonded together preferably to preserve the moisture vapour transmission properties thereof.

The breathable fabric lof also comprises a third layer of filamentous polymeric material 20f, the first, second and third layers 5f,15f,20f being intermittently bonded together preferably to preserve the moisture vapour transmission properties thereof.

The breathable fabric 10f thus comprises a laminate material including a first layer comprising the woven polymeric fabric 5f, and a second layer comprising a breathable polymeric membrane 15f. The first layer 5f comprises a top layer and the second layer 15f comprises an under layer. The first and second layers 5f,15f are stabilised respectively against ultra-violet light degradation and heat degradation. The breathable polymeric membrane 15f comprises a UV stabilised breathable membrane, which may or may not have a hydrophobic treatment applied via the melt or topically.

Referring to Figure 8(b), laminate 10g falling outside the scope of the present invention is provided with a further spunbond fabric 21g between the woven fabric 5g and the membrane 15g. Thus the breathable fabric 10g further comprises a fourth layer of filamentous polymeric material 21g between the woven polymeric fabric 5g and the membrane 1.5g.

The first layer 5g, fourth layer 21g, second layer 15g and third layer 20g are advantageously intermittently bonded preferably to preserve the moisture vapour transmission properties thereof.

The woven polymeric fabrics 5f;5g/breathable fabrics 10f, 10g find use as a breathable building materials 25f;25g. The breathable building materials 25f; 25g can be adapted for use as a roofing underlay. However, the breathable building materials 25f; 25g can advantageously be adapted for use as a housewrap or wall breather membrane, or alternatively as a temporary cover, e.g. a building cover or scaffolding cover, tent, tarpaulin or the like. The breathable building materials 25f;25g may also find use as a flooring material.

The woven polymeric fabric 5f;5g is manufactured by a method comprising the steps of: providing a polymeric material and a reflective material; forming the polymeric material and the reflective material into strands, e.g. tapes or threads; and weaving the strands together. The reflective material is a metallic material or a metal, and the polymeric material and reflective material are provided as a metallised polymer masterbatch as is the first example.

The breathable fabric lof;10g is manufactured by a method comprising the steps of: forming the woven polymeric fabric 5f;5g; providing a breathable polymeric membrane 15f ; 15g; and laminating the woven polymeric fabric 5f;5g and the breathable polymeric membrane 15f;15g one to the other.

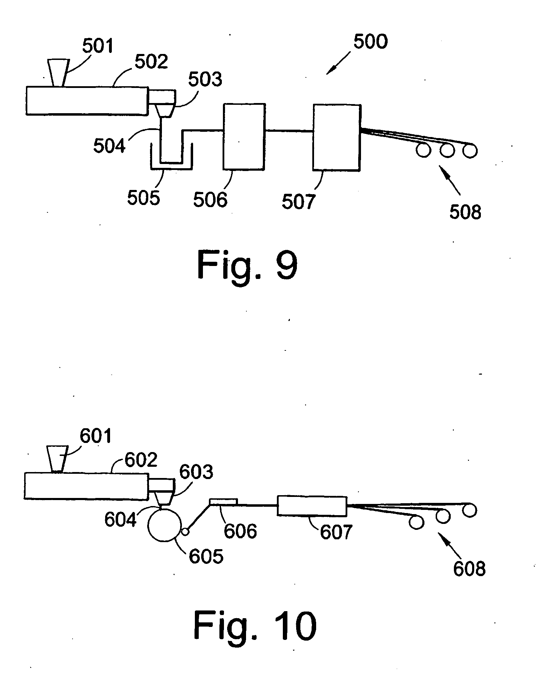

Such method can be carried out using either of the tape forming apparatus 500, 600 of Figures 9 or 10, a weaving loom (not shown), either of the microperforated membrane forming apparatus 300; 400, 450 of Figures 5 and 6(b) or Figures 6(a) and 6(b), respectively, and the lamination apparatus 150 of Figure 3.

The tape forming apparatus 500 of Figure 9 comprises a spinneret apparatus having a polymer feed 501, an extruder 502 including a tape extrusion means 503 for forming spun tapes 504, a quencher 505, an accumulator 506, an orientation/annealing means 507 and wind up spools 508.

The tape forming apparatus 600 of Figure 10 comprises a slit film apparatus having a polymer feed 601, an extruder 602 including a tape extrusion means 603 for forming a cast film 604, a chill roll 605, a film slitting means 606, an orientation/annealing means 607 and wind up spools 609 for tapes 610.

The fabric l0f,10g may comprise a woven fabric 25f,25g, having a weight of around 50 g/m², a membrane 15f,15g having a weight of around 30 g/m², and a filamentous polymeric fabric 20f,20g having a weight of around 30 g/m² to 100 g/m².

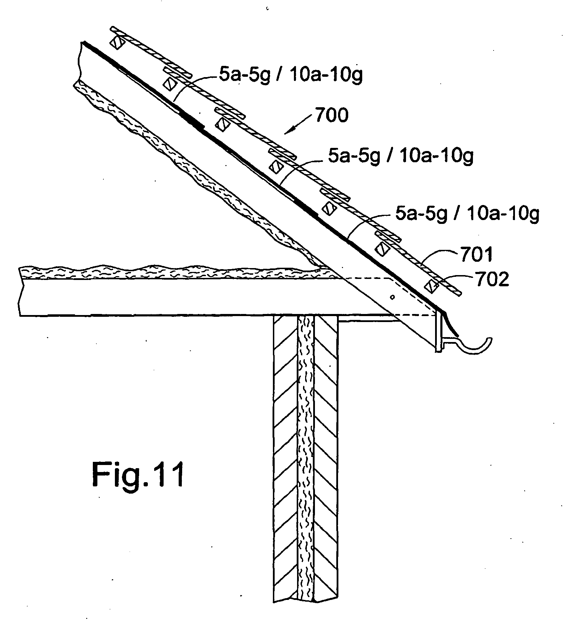

Referring now to Figure 11, there is shown a schematic cross-sectional side view of part of a building construction comprising a roof 700, e.g. a pitched tiled roof, including a filamentous polymeric fabric 5a-5g/breathable fabric 10a-10g as a roofing underlay and a plurality of tiles 701. As can be seen, the roof 700 may include a plurality of overlapping lengths of fabric 5a-5g, 10a-10g.

The fabric 5a - 5g, 10a - 10g may span between adjacent structural members (not shown), e.g. A-frames rafters, battens or the like. Further, as can be seen there are provided counter battens 702 spanning between and fixed to the structural members, the counter battens 702 supporting the tiles 701 in a conventional way.

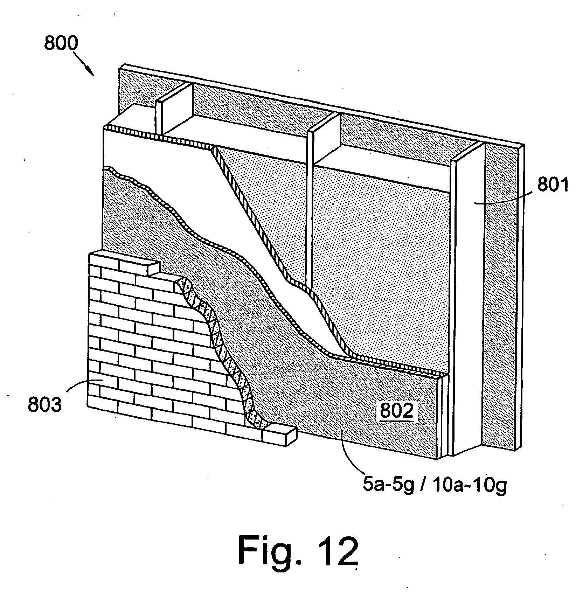

Referring finally to Figure 12, there is shown a schematic cut-away perspective view of part of a building construction comprising a cavity wall 800 of a timber frame 801, including a filamentous polymeric material 5a-5g/breathable fabric 10a-10g as a "housewrap", i.e. an outermost skin 802 of a timber frame 801). The building construction is finished by external skin 803 comprising bricks or the like. The building construction is typically constructed by erecting the timber frame 801 with outermost skin 802 and thereafter finishing with the external skin 803.

It will be appreciated that the embodiments of the present invention hereinbefore described are given by way of example only, and are not meant to limit the scope of the invention in any way.

It will be understood that although the fabrics of the present invention find particularly advantageous use in the building and/or construction industry, the fabrics of the invention may also find use in other sectors. Normally in such use, including roofing and housewrap, the reflecting layer can be disposed so as to be outer facing, e.g. to keep heat in and/or out. However, it will be appreciated that a reflective side of the breathable fabrics according to the present invention may be disposed outermost or innermost, e.g. in construction or building applications.

Also, a non-reflective/non-metallic side of a laminated fabric of the present invention may be non-pigmented or pigmented. For example, the colour white is preferred to augment the non-IR absorptive aspect of the fabric. Alternatively, the non-reflective/non-metallic side may be coloured, e.g. green.

Further, although the disclosed examples suggest calendering as the preferred lamination technique, other techniques may be suitable, e.g. ultrasonic spot welding or adhesive bonding.

The preferred disclosed lamination process is a thermal bond technique; hence one should select polymers for the membrane and reinforcing fabric(s) which are thermally compatible. The lamination process may be carried out in line or "on-line", i.e. during the spunbond manufacturing process, when the membrane is fed on to the web on unbonded fibres prior to calendering. The mass is then passed through the calender where the fibres are bonded to each other and to the membrane simultaneously. Alternatively and beneficially the lamination may be carried out "off-line", i.e. as a totally independent process. Components are passed simultaneously through a free standing calender with a smooth and embossed roller.

In either case, the embossed roller should typically have an embossing area of 7% to 35% of the fabric surface area, and should typically have a diamond, round or other shape emboss point pattern. The smooth roll should be of the swim roll type.

Other lamination methods, such as ultrasonic or adhesive may be used, but it is desired that, whatever method is selected, bonding is carried out at discrete points only, so as not to impair the moisture vapour transmission properties of the end product.

## Claims

1. A laminated breathable fabric (10h) having as a layer thereof a reflective film or membrane (30h), the fabric further comprising at least one spunbond filamentous polymeric layer (5h), wherein the reflective film or membrane and the at least one spunbond filamentous polymeric fabric layer are laminated together, wherein the reflective film or membrane comprises a polymeric material and a reflective material, and wherein further
the laminated breathable fabric comprises a liquid impermeable, liquid vapour permeable and air/gas permeable fabric,
the reflective film or membrane comprises a moisture vapour permeable and air/gas permeable film,
the reflective film or membrane comprises a microperforated metallised film,
the microperforations have a size of around 0.1mm to 1.0mm, and
the reflective film or membrane (30h) comprises a film or membrane comprising at least three layers (35h, 40h, 45h), wherein a middle layer (40h) includes or comprises the reflective material.

2. A laminated breathable fabric as claimed in claim 1, wherein the microperforations are around 0.6 mm in diameter.

3. A laminated breathable fabric as claimed in either of claims 1 to 2, wherein the microperforations have a surface coverage of around 2% to 10%.

4. A laminated breathable fabric as claimed in any of claims 1 to 3, wherein there are provided around 30 microperforated holes per inch² (per 6.45cm²).

5. A laminated breathable fabric as claimed in any preceding claim, wherein the reflective material is capable of reflecting at least infra-red radiation and/or heat.

6. A laminated breathable fabric as claimed in any preceding claim, wherein the reflective film or membrane has an emissivity of about 0.1 to about 0.6.

7. A laminated breathable fabric as claim in claim 6, wherein the reflective film or membrane has an emissivity of about 0.1 to about 0.3.

8. A laminated breathable fabric as claimed in any of claims 1 to 4, wherein the reflective material substantially comprises a metal or metallic based material.

9. A laminated breathable fabric as claimed in claim 8, wherein the metal or metallic based material comprises aluminium or an alloy thereof.

10. A laminated breathable fabric as claimed in any preceding claim, wherein the reflective film or membrane comprises a single layer film or membrane or a multiple layer film or membrane.

11. A laminated breathable fabric as claimed in either claims 1 or 10, wherein the reflective film or membrane is of an "AB" or "ABA" type, wherein "A" is a first polymeric material optionally including a UV Stabiliser, and "B" is a second polymeric material including the reflective material.

12. A laminated breathable fabric as claimed in any preceding claim, wherein the reflective material is provided as an additive to a polymeric material melt used to produce the reflective film or membrane.

13. A laminated breathable fabric as claimed in either claims 1 or 10, wherein the reflective film or membrane comprises a multiple film or membrane, wherein a middle layer (40h) comprises the reflective material deposited onto one of the layers (35h, 45h).

14. A laminated breathable fabric as claimed in either of claims 1 or 10 or claim 13, wherein the reflective film or membrane (30h) is of an "AC" or "ACA" type in which "A" is a first polymeric material layer (35h 45h), optionally including a UV stabilizer, and "C" is a reflective material layer (40h) deposited onto one of the first polymer material layers (35h, 45h).

15. A laminated breathable fabric as claimed in claim 14, wherein the first polymeric layer (35h, 45h) "A" is around 10 µm to 30 µm in thickness.

16. A laminated breathable fabric as claimed in either of claims 14 or 15, wherein the reflective material layer (40h) "C" is around 10 nm to 100 nm thick.

17. A laminated breathable fabric as claimed in any of claims 13 to 16, wherein the reflective material layer is deposited by a deposition process such as vacuum vapour deposition or plasma deposition.

18. A laminated breathable fabric as claimed in any preceding claim, wherein the polymeric material(s) comprises one or more additives selected from ultra-violet (UV) stabilisers, hydrophobic additives, flame retardants, pigments, colour pigments, and/or plasticisers.

19. A laminated breathable fabric as claimed in either of claims 1 or 18, wherein the polymeric material(s) is a thermo-plastic polymer(s) selected from polypropylene, polyamide or polyester.

20. A breathable fabric as claimed in any preceding claim, wherein the reflective film or membrane comprises a breathable polymeric film or membrane layer.

21. A laminated fabric as claimed in any preceding claim, wherein the reflective film or membrane and the at least one spunbond filamentous fabric layer are intermittently bonded to preserve the moisture vapour transmission properties thereof.

22. A laminated breathable fabric as claimed in claim 21, wherein the reflective film or membrane is hot melt bonded to the at least one spunbond filamentous polymeric fabric layer.

23. A laminated breathable fabric as claimed in claim 21, wherein a further spunbond layer is provided between the reflective film or membrane and a breathable polymeric membrane, the further spunbond layer providing additional strength, the further spunbond layer containing an ultra-violet stabiliser and/or a hydrophobic additive, and the reflective film, further spunbond layer, breathable polymeric membrane and spunbond layer being intermittently bonded to preserve the moisture vapour transmission properties thereof.

24. A laminated breathable fabric as claimed in any preceding claim, wherein the laminated breathable fabric includes a woven fabric layer.

25. A laminated breathable fabric as claimed in claim 1, wherein the reflective film or membrane comprises at least one breathable polymeric film or membrane layer laminated to the at least one filamentous polymeric fabric layer, and wherein the reflective film comprises a reflective material layer provided on a breathable polymeric film or membrane layer.

26. A breathable building or construction material (25h) comprising a laminated breathable fabric (10h) as claimed in any of the claims 1 to 25.

27. A breathable building material as claimed in claim 26, wherein the breathable building material is adapted for use as a roofing underlay, a housewrap, a wall breather membrane, or for other construction uses such as a temporary cover or as a flooring material.

28. Use as a building or construction material (25h) of a laminated breathable fabric (10h) as claimed in any of claims 1 to 25.

29. A building construction (700) including a laminated breathable fabric (10h) as claimed in any of claims 1 to 25.

30. A building construction including a laminated breathable fabric as claimed in claim 29, wherein the building construction comprises: a roof (700), a tiled roof, a pitched roof, a timber frame (801), a cavity wall (800) or a floor.

31. A building including a building construction as claimed in either of claims 29 or 30.

## Patentansprüche

1. Laminierter, atmungsaktiver Stoff (10h) mit einer reflektierenden Folie oder Membran (30h), als Lage davon, wobei der Stoff ferner mindestens eine faserförmige, polymere Spinnvlieslage (5h) umfasst, wobei die reflektierende Folie oder Membran und die mindestens eine faserförmige, polymere Spinnvlieslage zusammen laminiert sind, wobei die reflektierende Folie oder Membran ein polymeres Material und ein reflektierendes Material umfasst, und wobei ferner
der laminierte, atmungsaktive Stoff einen flüssigkeitsundurchlässigen, flüssigkeitsdampfdurchlässigen und luft-/gasdurchlässigen Stoff umfasst,
die reflektierende Folie oder Membran eine wasserdampfdurchlässige und luft/gasdurchlässige Folie umfasst,
die reflektierende Folie oder Membran eine mikroperforierte metallisierte Folie umfasst,
die Mikroperforierungen eine Größe von etwa 0,1 mm bis 1,0 mm aufweisen, und die reflektierende Folie oder Membran (30h) mindestens drei Lagen (35h, 40h, 45h) umfasst, wobei eine mittlere Lage (40h) das reflektierende Material umfasst oder einschließt.

2. Laminierter, atmungsaktiver Stoff nach Anspruch 1, wobei der Durchmesser der Mikroperforierungen etwa 0,6 mm beträgt.

3. Laminierter, atmungsaktiver Stoff nach einem der Ansprüche 1 bis 2, wobei die Mikroperforierungen eine Oberflächenabdeckung von etwa 2% bis 10% aufweisen.

4. Laminierter, atmungsaktiver Stoff nach einem der Ansprüche 1 bis 3, wobei etwa 30 mikroperforierte Löcher pro Inch² (pro 6,45 cm²) bereitgestellt werden.

5. Laminierter, atmungsaktiver Stoff nach einem der vorangehenden Ansprüche, wobei das reflektierende Material in der Lage ist, mindestens infrarote Strahlung und/oder Hitze zu reflektieren.

6. Laminierter, atmungsaktiver Stoff nach einem der vorangehenden Ansprüche, wobei die reflektierende Folie oder Membran einen Emissionsgrad von etwa 0,1 bis etwa 0,6 aufweist.

7. Laminierter, atmungsaktiver Stoff nach Anspruch 6, wobei die reflektierende Folie oder Membran einen Emissionsgrad von etwa 0,1 bis etwa 0,3 aufweist.

8. Laminierter, atmungsaktiver Stoff nach einem der Ansprüche 1 bis 4, wobei das reflektierende Material im Wesentlichen ein Metall oder ein auf Metall basierendes Material umfasst.

9. Laminierter, atmungsaktiver Stoff nach Anspruch 8, wobei das Metall oder das auf Metall basierende Material Aluminium oder eine Legierung davon umfasst.

10. Laminierter, atmungsaktiver Stoff nach einem der vorangehenden Ansprüche, wobei die reflektierende Folie oder Membran eine einlagige Folie oder Membran oder eine mehrlagige Folie oder Membran umfasst.

11. Laminierter, atmungsaktiver Stoff nach Anspruch 1 oder 10, wobei die reflektierende Folie oder Membran vom "AB"- oder "ABA"-Typ ist, wobei "A" ein erstes polymeres Material ist, das wahlweise einen UV-Stabilisator einschließt, und "B" ein zweites polymeres Material ist, das das reflektierende Material einschließt.

12. Laminierter, atmungsaktiver Stoff nach einem der vorangehenden Ansprüche, wobei das reflektierende Material als ein aus polymerem Material Zusatzmittel für eine zur Herstellung der reflektierenden Folie oder Membran verwendete Schmelzung bereitgestellt wird.

13. Laminierter, atmungsaktiver Stoff nach Anspruch 1 oder 10, wobei die reflektierende Folie oder Membran eine Mehrfachfolie oder -membran umfasst, wobei eine mittlere Lage (40h) das auf eine der Lagen (35h, 45h) abgelagerte reflektierende Material umfasst.

14. Laminierter, atmungsaktiver Stoff nach Anspruch 1 oder 10 oder Anspruch 13, wobei die reflektierende Folie oder Membran (30h) vom "AC"- oder "ACA"-Typ ist, wobei "A" eine erste Lage aus polymerem Material (35h, 45h) ist, die wahlweise einen UV-Stabilisator einschließt, und "C" eine auf einer der ersten Lagen aus polymerem Material (35h, 45h) abgelagerte Lage aus reflektierendem Material (40h) ist.

15. Laminierter, atmungsaktiver Stoff nach Anspruch 14, wobei die Dicke der ersten polymeren Lage (35h, 45h) "A" etwa 10 µm bis 30 µm beträgt.

16. Laminierter, atmungsaktiver Stoff nach Anspruch 14 oder 15, wobei die Lage aus reflektierendem Material (40h) "C" etwa 10 nm bis 100 nm dick ist.

17. Laminierter, atmungsaktiver Stoff nach einem der Ansprüche 13 bis 16, wobei die Lage aus reflektierendem Material durch ein Abscheidungsverfahren, wie etwa Vakuumdampfabscheidung oder Plasmaabscheidung abgelagert wird.

18. Laminierter, atmungsaktiver Stoff nach einem der vorangehenden Ansprüche, wobei das/die polymere(n) Material(ien) ein oder mehrere Zusatzmittel ausgewählt aus Ultraviolett-(UV)-Stabilisatoren, wasserabweisenden Zusatzmitteln, Flammhemmern, Pigmenten, Farbpigmenten, und/oder Weichmachern ist/sind.

19. Laminierter, atmungsaktiver Stoff nach einem der Ansprüche 1 oder 18, wobei das/die polymere(n) Material(ien) ein thermoplastische(s) Polymer(e), ausgewählt aus Polypropylen, Polyamid oder Polyester ist/sind.

20. Laminierter, atmungsaktiver Stoff nach einem der vorangehenden Ansprüche, wobei die reflektierende Folie oder Membran eine Lage aus atmungsaktiver, polymerer Folie oder Membran umfasst.

21. Laminierter, atmungsaktiver Stoff nach einem der vorangehenden Ansprüche, wobei die reflektierende Folie oder Membran und die mindestens eine faserförmige, polymere Spinnvliesstofflage periodisch miteinander verbunden sind, um die Wasserdampf-Übertragungseigenschaften davon zu erhalten.

22. Laminierter, atmungsaktiver Stoff nach Anspruch 21, wobei die reflektierende Folie oder Membran durch ein Heißschmelzverfahren mit der mindestens einen faserförmigen, polymeren Spinnvliesstofflage verbunden wird.

23. Laminierter, atmungsaktiver Stoff nach Anspruch 21, wobei eine weitere Spinnvlieslage zwischen der reflektierenden Folie oder Membran und einer atmungsaktiven polymeren Membran bereitgestellt wird, wobei die weitere Spinnvlieslage zusätzliche Festigkeit bereitstellt, wobei die weitere Spinnvlieslage einen Ultaviolett-Stabilisator und/oder ein wasserabweisendes Zusatzmittel enthält, und die reflektierende Folie, die weitere Spinnvlieslage, die atmungsaktive polymere Membran und die Spinnvlieslage periodisch miteinander verbunden sind, um die Wasserdampf-Übertragungseigenschaften davon zu erhalten.

24. Laminierter, atmungsaktiver Stoff nach einem der vorangehenden Ansprüche, wobei der laminierte atmungsaktive Stoff eine Gewebelage ist.

25. Laminierter, atmungsaktiver Stoff nach Anspruch 1, wobei die reflektierende Folie oder Membran mindestens eine atmungsaktive polymere Folien- oder Membranlage umfasst, die mit der mindestens einen Lage aus faserförmigem, polymerem Stoff laminiert ist, und wobei die reflektierende Folie eine Lage aus reflektierendem Material umfasst, das auf einer atmungsaktiven, polymeren Folien- oder Membranlage bereitgestellt ist.

26. Atmungsaktives Bau- oder Konstruktionsmaterial (25h) umfassend einen laminierten, atmungsaktiven Stoff (10h) nach einem der Ansprüche 1 bis 25.

27. Atmungsaktives Baumaterial nach Anspruch 26, wobei das atmungsaktive Baumaterial für eine Anwendung als Dachunterspannbahn, Hausumhüllung, atmungsaktiven Fassadenbahnen, oder für andere Bauanwendungen wie eine(n) vorübergehende(n) Abdeckung oder Bodenbelag geeignet ist.

28. Anwendung als Bau- oder Konstruktionsmaterial (25h) eines laminierten atmungsaktiven Stoffes (10h) nach einem der Ansprüche 1 bis 25.

29. Gebäudekonstruktion (700) umfassend einen laminierten atmungsaktiven Stoff (10h) nach einem der Ansprüche 1 bis 25.

30. Gebäudekonstruktion umfassend einen laminierten atmungsaktiven Stoff nach Anspruch 29, wobei die Gebäudekonstruktion folgendes umfasst: ein Dach (700), ein Ziegeldach, ein Giebeldach, einen Holzrahmen (801), eine Hohlwand (800) und eine Geschossdecke.

31. Ein Gebäude umfassend eine Gebäudekonstruktion nach einem der Ansprüche 29 oder 30.

## Revendications

1. Étoffe perméable à l'air stratifiée (10h) comportant comme couche de celle-ci un film ou une membrane réfléchissant(e) (30h), l'étoffe comprenant en outre au moins une couche polymérique filamenteuse filée-liée (5h), dans laquelle le film ou la membrane réfléchissant(e) et la au moins une couche polymérique filamenteuse filée-liée sont laminés ensemble, dans laquelle le film ou la membrane réfléchissant(e) comprend un matériau polymérique et un matériau réfléchissant, et dans laquelle en outre
l'étoffe perméable à l'air stratifiée comprend une étoffe imperméable au liquide, perméable à la vapeur liquide et perméable à l'air/au gaz,
le film ou la membrane réfléchissant(e) comprend un film perméable à l'humidité et perméable à l'air/au gaz,
le film ou la membrane réfléchissant(e) comprend un film métallisé microperforé, les microperforations ont une taille d'environ 0,1 mm à 1,0 mm, et
le film ou la membrane réfléchissant(e) (30h) comprend un film ou une membrane comprenant au moins trois couches (35h, 40h, 45h), dans lesquels une couche intermédiaire (40h) inclut ou comprend le matériau réfléchissant.

2. Étoffe perméable à l'air stratifiée telle que revendiquée dans la revendication 1, dans laquelle les microperforations ont un diamètre d'environ 0,6 mm.

3. Étoffe perméable à l'air stratifiée telle que revendiquée dans l'une ou l'autre des revendications 1 à 2, dans laquelle les microperforations ont une couverture de surface d'environ 2% à 10%.

4. Étoffe perméable à l'air stratifiée telle que revendiquée dans l'une quelconque des revendications 1 à 3, dans laquelle sont fournis environ 30 trous microperforés par pouce carré (soit 6,45 cm²).

5. Étoffe perméable à l'air stratifiée telle que revendiquée dans l'une quelconque des revendications précédentes, dans laquelle le matériau réfléchissant est capable de réfléchir au moins un rayonnement et/ou une chaleur infrarouge(s).

6. Étoffe perméable à l'air stratifiée telle que revendiquée dans l'une quelconque des revendications précédentes, dans laquelle le film ou la membrane réfléchissant(e) a une émissivité d'environ 0,1 à environ 0,6.

7. Étoffe perméable à l'air stratifiée telle que revendiquée dans la revendication 6, dans laquelle le film ou la membrane réfléchissant(e) a une émissivité d'environ 0,1 à environ 0,3.

8. Étoffe perméable à l'air stratifiée telle que revendiquée dans l'une quelconque des revendications 1 à 4, dans laquelle le matériau réflectif comprend un métal ou un matériau à base de métal.

9. Étoffe perméable à l'air stratifiée telle que revendiquée dans la revendication 8, dans laquelle le métal ou le matériau à base de métal comprend de l'aluminium ou un alliage de celui-ci.

10. Étoffe perméable à l'air stratifiée telle que revendiquée dans l'une quelconque des revendications précédentes, dans laquelle le film ou la membrane réfléchissant(e) comprend un film ou une membrane de couche unique ou bien un film ou une membrane de couche multiple.

11. Étoffe perméable à l'air stratifiée telle que revendiquée dans l'une ou l'autre des revendications 1 et 10, dans laquelle le film ou la membrane réfléchissant(e) est du type "AB" ou "ABA", dans laquelle "A" est un premier matériau polymérique incluant optionnellement un stabilisant UV, et "B" est un second matériau polymérique incluant le matériau réfléchissant.

12. Étoffe perméable à l'air stratifiée telle que revendiquée dans l'une quelconque des revendications précédentes, dans laquelle le matériau réfléchissant est fourni en tant qu'additif à une fusion de matériau polymérique utilisée pour produire le film ou la membrane réfléchissant(e).

13. Étoffe perméable à l'air stratifiée telle que revendiquée dans l'une ou l'autre des revendications 1 et 10, dans laquelle le film ou la membrane réfléchissant(e) comprend un film ou une membrane multiple, dans laquelle une couche intermédiaire (40h) comprend le matériau réfléchissant déposé sur une des couches (35h, 45h).

14. Étoffe perméable à l'air stratifiée telle que revendiquée dans l'une ou l'autre des revendications 1 et 10 ou la revendication 13, dans laquelle le film ou la membrane réfléchissant(e) (30h) est du type "AC" ou "ACA", dans laquelle "A" est une première couche de matériau polymérique (35h, 45h) incluant optionnellement un stabilisant UV, et "C" est une seconde couche de matériau réfléchissant (40h) déposée sur une des premières couches de matériau polymérique (35h, 45h).

15. Étoffe perméable à l'air stratifiée telle que revendiquée dans la revendication 14, dans laquelle la première couche polymérique (35h, 45h) "A" a une épaisseur d'environ 10 µm à 30 µm.

16. Étoffe perméable à l'air stratifiée telle que revendiquée dans l'une ou l'autre des revendications 14 et 15, dans laquelle la couche de matériau réfléchissant (40h) "C" a une épaisseur d'environ 10 nm à 100 nm.

17. Étoffe perméable à l'air stratifiée telle que revendiquée dans l'une quelconque des revendications 13 à 16, dans laquelle la couche de matériau réfléchissant est déposée par un processus de déposition tel que le dépôt par évaporation sous vide ou le dépôt en phase vapeur activé par plasma.

18. Étoffe perméable à l'air stratifiée telle que revendiquée dans l'une quelconque des revendications précédentes, dans laquelle le(s) matériau(x) polymérique(s) comprend/comprennent un ou plusieurs additifs sélectionnés à partir de stabilisants ultra-violet (UV), d'additifs hydrophobes, d'ignifugeants, de pigments, de pigments de couleur, et/ou de plastifiants.

19. Étoffe perméable à l'air stratifiée telle que revendiquée dans l'une ou l'autre des revendications 1 et 18, dans laquelle le(s) matériau(x) polymérique(s) est/sont un/des polymère(s) thermoplastique(s) sélectionnés à partir de polypropylène, de polyamide ou de polyester.

20. Étoffe perméable à l'air stratifiée telle que revendiquée dans l'une quelconque des revendications précédentes, dans laquelle le film ou la membrane réfléchissant(e) comprend une couche de film ou de membrane polymérique perméable à l'air.

21. Étoffe stratifiée telle que revendiquée dans l'une quelconque des revendications précédentes, dans laquelle le film ou la membrane réfléchissant(e) et la au moins une couche polymérique filamenteuse filée-liée sont liés de manière intermittente afin d'en préserver les propriétés de perméabilité à l'humidité.

22. Étoffe perméable à l'air stratifiée telle que revendiquée dans la revendication 21, dans laquelle le film ou la membrane réfléchissant(e) est lié(e) par fusion à chaud à la au moins une couche polymérique filamenteuse filée-liée.

23. Étoffe perméable à l'air stratifiée telle que revendiquée dans la revendication 21, dans laquelle une couche filée-liée supplémentaire est fournie entre le film ou la membrane réfléchissant(e) et une membrane polymérique perméable à l'air, la couche filée-liée supplémentaire apportant une force additionnelle, la couche filée-liée supplémentaire contenant un stabilisant ultra-violet et/ou un additif hydrophobe, et le film réfléchissant, la couche filée-liée supplémentaire, la membrane polymérique perméable à l'air ainsi que la couche filée-liée étant liés de manière intermittente pour en préserver les propriétés de perméabilité à l'humidité.

24. Étoffe perméable à l'air stratifiée telle que revendiquée dans l'une quelconque des revendications précédentes, dans laquelle l'étoffe perméable à l'air stratifiée inclut une couche d'étoffe tissée.

25. Étoffe perméable à l'air stratifiée telle que revendiquée dans la revendication 1, dans laquelle le film ou la membrane réfléchissant(e) comprend au moins une couche de film ou de membrane polymérique perméable à l'air stratifiée sur la au moins une couche d'étoffe polymérique filamenteuse, et dans laquelle le film réfléchissant comprend une couche de matériau réfléchissant fournie sur une couche de film ou de membrane polymérique perméable à l'air.

26. Matériau de construction ou d'édifice perméable à l'air (25h) comprenant une étoffe perméable à l'air stratifiée (10h) telle que revendiquée dans l'une quelconque des revendications 1 à 25.

27. Étoffe perméable à l'air stratifiée telle que revendiquée dans la revendication 26, dans laquelle le matériau de construction perméable à l'air est adapté pour une utilisation en tant que couche d'assise de toiture, membrane pare-air, membrane respirante murale, ou en vue d'autres utilisations de construction telles qu'un revêtement temporaire ou un matériau de planchéiage.

28. Utilisation en tant que matériau de construction ou d'édifice (25h) d'une étoffe perméable à l'air stratifiée (10h) telle que revendiquée dans l'une quelconque des revendications 1 à 25.

29. Construction de bâtiment (700) incluant une étoffe perméable à l'air stratifiée (10h) telle que revendiquée dans l'une quelconque des revendications 1 à 25.

30. Construction de bâtiment incluant une étoffe perméable à l'air stratifiée telle que revendiquée dans la revendication 29, dans laquelle la construction d'édifice comprend : un toit (700), un toit en tuiles, une toiture inclinée, une ossature en bois (801), une paroi à cavité (800) ou un sol.

31. Edifice incluant une construction de bâtiment telle que revendiquée dans l'une ou l'autre des revendications 29 à 30.
